# EUROPEAN PATENT APPLICATION

(11) **EP 4 280 650 A1**
(43) Date of publication of application: **22.11.2023**
(21) Application number: 21919404.0
(22) Date of filing: 15.01.2021
(51) Int. Cl.: H04W 16/26, H04W 72/04, H04W 28/18

(54) **WIRELESS COMMUNICATION NODE AND WIRELESS COMMUNICATION METHOD**

(71) Applicant: NTT DOCOMO, INC., Tokyo 100-6150 (JP)
(72) Inventor: KURITA, Daisuke, Tokyo 100-6150 (JP); HARADA, Hiroki, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2021/001374
(87) International publication number: WO 2022/153511

(57) **Abstract**

A radio communication node receives a link indication indicating a link direction of a time resource allocated to a radio link in a lower node from the lower node, and transmits the link indication received from the lower node to another lower node.

## Description

### [Technical Field]

The present disclosure relates to a radio communication node and a radio communication method for configuring a radio access and a radio backhaul.

### [Background Art]

3rd Generation Partnership Project (3GPP) specifies 5th generation mobile communication system (5G, also called New Radio (NR) or Next Generation (NG), further, a succeeding system called Beyond 5G, 5G Evolution or 6G is being specified.

For example, an NR radio access network (RAN) specifies Integrated Access and Backhaul (IAB) that integrates radio access to a terminal (User Equipment, UE) and a radio backhaul between radio communication nodes such as a radio base station (gNB) (see Non-Patent Literature 1).

In IAB, an IAB node has a Mobile Termination (MT) function for connecting to a parent node (which may be referred to as an IAB donor) and a Distributed Unit (DU) function for connecting to a child node or UE.

The IAB is also studying dual connectivity (DC) scenarios, for example, intra-band DC and intra-carrier DC (Non-Patent Literature 2) .

### [Citation List]

### [Non-Patent Literature]

[Non-Patent Literature 1]
   3GPP TS 38.213 V 16.1.0, 3rd Generation Partnership Project; Technical Specification Group Radio Access Network; NR; Physical layer procedures for control (Release 16), 3GPP, March 2020
[Non-Patent Literature 2] "RANI Chairman's Notes", 3GPP TSG RAN WG1 Meeting # 103-e, 3GPP, November 2020

### [Summary of Invention]

In the case of the Intra-band DC or the like described above, since each symbol (time resource) is limited to half-duplex communication, the IAB node (MT) can transmit/receive only in either link direction (uplink (UL)/downlink (DL)) in each symbol.

Therefore, when different (In other words, they contradict each other.) link directions are indicated by two parent nodes to which the DC is intended, the IAB node (MT) cannot individually respond to the indication.

Accordingly, the following disclosure has been made in view of such a situation, and it is an object of the present invention to provide a radio communication node and a radio communication method that can operate normally even when the indicated link directions are inconsistent in an intra-band DC (Intra-band DC).

One aspect of the present disclosure is a radio communication node (radio communication node 50) including a reception unit (lower node connection unit 55) that receives a link indication indicating a link direction of a time resource allocated to a radio link in a lower node from the lower node, and a transmission unit (transmission unit) that transmits the link indication received from the lower node to another lower node.

One aspect of the present disclosure is a radio communication node (radio communication node 150) including a reception unit (upper node connection unit 170) that receives a link indication indicating a link direction of a time resource allocated to a radio link in a lower node from a first upper node, and a transmission unit that transmits the link indication received from the first upper node to the second upper node.

One aspect of the present disclosure is a radio communication node (radio communication node 150) including a reception unit (upper node connection unit 170) that receives a link indication indicating a link direction of a time resource allocated to a radio link in a lower node from a first upper node and a second upper node, respectively, and a control unit (control unit 190) that operates according to either the link indication received from the first upper node or the link indication received from the second upper node.

One aspect of the present disclosure is a radio communication method including the steps of receiving, by a radio communication node, a link indication indicating a link direction of a time resource allocated to a radio link in a lower node from a first upper node, and transmitting, by the radio communication node, the link indication received from the lower node to another lower node.

One aspect of the present disclosure is a radio communication method including the steps of receiving, by a radio communication node, a link indication indicating a link direction of a time resource allocated to a radio link in a lower node from a first upper node, and transmitting, by the radio communication node, the link indication received from the lower node to a second upper node.

One aspect of the present disclosure is a radio communication method including the steps of receiving, by a radio communication node, a link indication indicating a link direction of a time resource allocated to a radio link in a lower node from a first upper node and a second upper node, respectively, and operating, by the radio communication node, according to either the link indication received from the first upper node or the link indication received from the second upper node.

### [Brief Description of Drawings]

[FIG. 1] FIG. 1 is an overall schematic configuration diagram of radio communication system 10.
[FIG. 2] FIG. 2 is a functional block diagram of the radio communication node 150.
[FIG. 3] FIG. 3 is a functional block diagram of the radio communication node 50.
[FIG. 4] FIG. 4 is a diagram showing an example of link indication in the Intra-band DC scenario of the IAB.
[FIG. 5] FIG. 5 is a diagram showing an example of dynamic indication of the slot format according to the operation example 2 - 1 (Option 1).
[FIG. 6] FIG. 6 is a diagram showing an example of dynamic indication of the slot format according to the operation example 2 - 1 (Option 2).
[FIG. 7] FIG. 7 is a diagram showing an example of dynamic indication of the slot format according to the operation example 2 - 2.
[FIG. 8] FIG. 8 is a diagram showing an example of a hardware configuration of the radio communication node 50, the radio communication node 100, and the radio communication node 150.

### [Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

### (1)Overall schematic configuration of the radio communication system

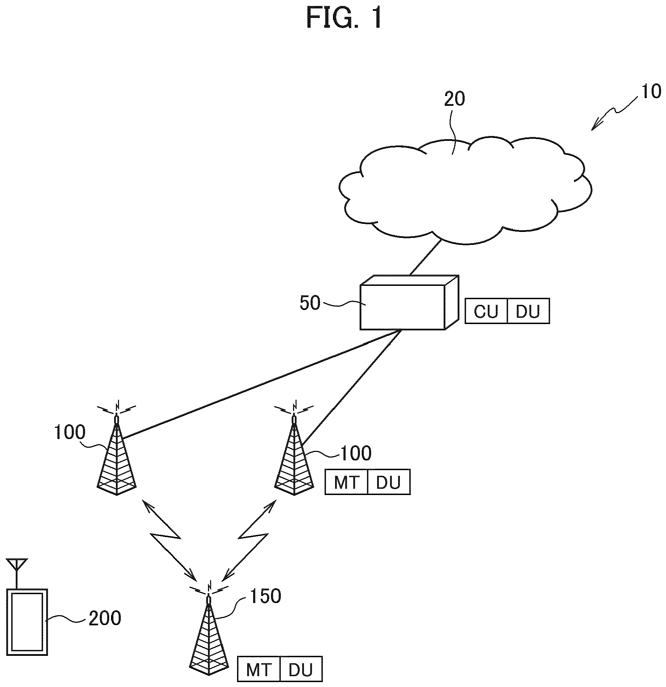

FIG. 1 is an overall schematic configuration diagram of a radio communication system 10 according to this embodiment. The radio communication system 10 is a radio communication system in accordance with 5G New Radio (NR) and comprises a plurality of radio communication nodes and terminals. The radio communication system 10 may be a radio communication system that follows a scheme called Beyond 5G, 5G Evolution or 6G.

Specifically, radio communication system 10 includes a Next Generation-Radio Access Network 20 (UE 200, User Equipment), hereinafter referred to as NG-RAN 20, radio communication node 50, radio communication node 100, radio communication node 150, and terminal 200.

The radio communication node 50, the radio communication node 100, and the radio communication node 150 can configure a radio access (access link) with the UE 200 and a radio backhaul (backhaul link) between the radio communication nodes via the cell. For example, a backhaul (transmission path) by a radio link may be configured between the radio communication node 50 and the radio communication node 100, or between the radio communication node 100 and the radio communication node 150.

Thus, a configuration in which radio access with the UE 200 and a radio backhaul between the radio communication nodes are integrated is called Integrated Access and Backhaul (IAB).

The IAB reuses existing functions and interfaces defined for radio access. In particular, Mobile-Termination (MT), gNB-DU (Distributed Unit), gNB-CU (Central Unit), User Plane Function (UPF), Access and Mobility Management Function (AMF) and Session Management Function (SMF) and corresponding interfaces such as NR Uu (between MT and gNB/DU), F1, NG, X2 and N4 may be used as baselines.

Radio communication node 100 is connected to NG-RAN 20 and a core network (Next Generation Core (NGC) or 5 GC) via a wired transmission line, such as a fiber transport. NG-RAN and NGC may be included and simply referred to as "network".

In this embodiment, the radio communication node 50 may constitute an IAB donor in the IAB, and the radio communication node 100 may constitute a parent node in the IAB. The radio communication node 150 may constitute an IAB node in the IAB.

The IAB donor (which may be a parent node) may be referred to as an upper node in relation to the IAB node. In addition, the IAB donor may be referred to as a parent node or vice versa. Also, the IAB donor may have a CU, and the parent node may be used simply as a name in relation to the IAB node (or child node) and may not have a CU. The IAB node may be referred to as a subordinate node in relation to the IAB donor (parent node). The child node may include the UE 200.

A backhaul link is established between the IAB donor (or parent node) and the IAB node. Specifically, a radio link called Link_parent may be configured. A radio link (Backhaul link) is configured between the IAB node and the child node. Specifically, a radio link called Link _child may be configured.

The link_parent may consist of a DL Parent BH in the downward direction and a UL Parent BH in the upward direction. Link_child may comprise DL Child BH in the downward direction and UL Child BH in the upward direction.

An IAB node (which may include a parent node) has a Mobile Termination (IAB-MT) function for connecting to an IAB donor (or parent node) and a Distributed Unit (IAB-DU) function for connecting to a child node (or UE 200). The child node also has an MT and a DU. The IAB donor has a Central Unit (CU) and a DU.

In terms of radio resources used by the DU, downlink (DL), uplink (UL) and flexible time-resource (D/U/F) are classified into any type of hard, soft or not available (H/S/NA). In Soft (S), available or not available is also defined.

Flexible time-resource (F) is a radio resource (time resource and/or frequency resource) that can be used for either DL or UL. "Hard" is a radio resource whose corresponding time resource is always available for a DU child link connected to a child node or UE, and "Soft" is a radio resource (DU resource) whose availability of the corresponding time resource for a DU child link is explicitly or implicitly controlled by an IAB donor (or parent node).

In addition, if it is Soft (S), the radio resource to be notified can be determined based on IA or INA.

IA means that the DU resource is explicitly or implicitly indicated as available. Also, "INA" means that the DU resource is explicitly or implicitly indicated as unavailable.

In this embodiment, the radio access and the radio backhaul may be half-duplex or full-duplex. Time division multiplexing (TDM), space division multiplexing (SDM) and frequency division multiplexing (FDM) are available as multiplexing methods.

When an IAB node operates in half-duplex communication, DL Parent BH is on the receiving (RX) side, UL Parent BH is on the transmitting (TX) side, DL Child BH is on the transmitting (TX) side, and UL Child BH is on the receiving (RX) side. In the case of the time division duplex (TDD), the setting pattern of DL/UL in the IAB node is not limited to DL-F-UL only, and only the radio backhaul (BH), a setting pattern such as UL-F-DL may be applied. In this embodiment, SDM/FDM is used to realize simultaneous operation of DU and MT of the IAB node.

Also, in radio communication system 10, the IAB can also support dual connectivity (DC) scenarios, for example, intra-band DC and intra-carrier DC.

Intra-band DC is DC within a specific frequency band (band), and multiple component carriers (CCs) may be used. Intra-Carrier DC is a DC in one CC band. Intra-band DC may include Intra-carrier DC.

As shown in FIG. 1, radio communication node 150 (IAB node) may connect to two radio communication nodes 100 to perform DC. In this case, one radio communication node 100 may constitute a master cell group (MCG), and the other radio communication node 100 may constitute a secondary cell group (SCG).

### (2)Function block configuration of radio communication system

Next, the functional block configuration of radio communication system 10 will be described. Specifically, the functional block configurations of the radio communication node 50 and the radio communication node 150 will be described.

### (2.1) Radio communication Node 150

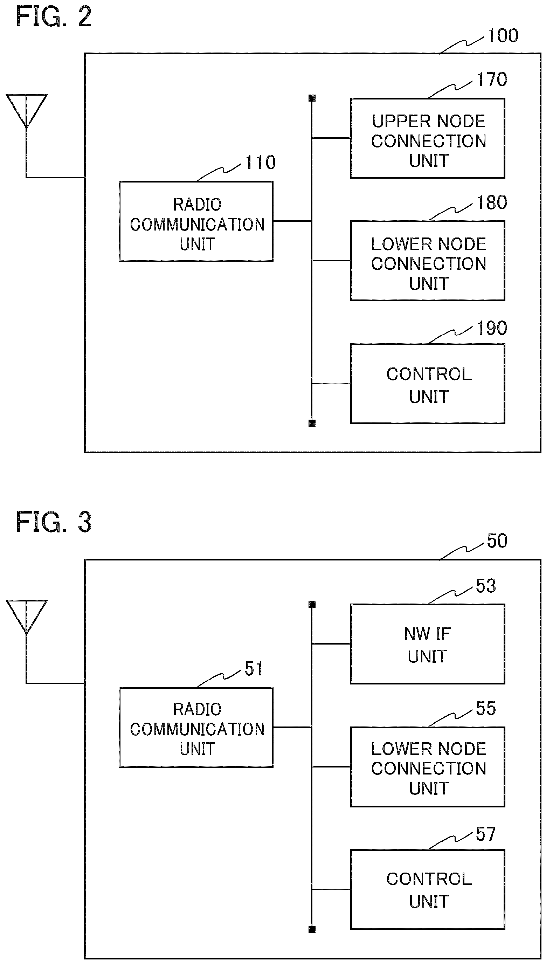

FIG. 2 is a functional block diagram of the radio communication node 150 constituting the IAB node. As shown in FIG. 2, the radio communication node 150 includes a radio communication unit 110, an upper node connection unit 170, a lower node connection unit 180, and a control unit 190.

The radio communication unit 110 transmits and receives a radio signal according to NR. By controlling radio (RF) signals transmitted from a plurality of antenna elements, the radio communication unit 110 can support Massive MIMO that generates a beam with a higher directivity, carrier aggregation (CA) that uses a plurality of component carriers (CCs) bundled together, and dual connectivity (DC) that simultaneously communicates between the UE and each of the two NG-RAN nodes.

The upper node connection unit 170 provides an interface for achieving connection with a node higher than the IAB node. The upper node means a radio communication node located on a network, more specifically, on the core network side (which may be referred to as an upstream side or an upstream side) than the IAB node.

More specifically, the upper node connection unit 170 provides the function of Mobile Termination (MT). That is, in the present embodiment, the upper node connection unit 170 is used for connection with a parent node (radio communication node 100) constituting the upper node.

The upper node connection unit 170 can receive a link indication indicating the link direction of the time resource allocated to the radio link with the lower node from any of the radio communication nodes 100 (the first upper node). Further, the upper node connecting unit 170 can transmit the link indication received from the first upper node to another radio communication node 100 (second upper node).

In the present embodiment, the upper node connection portion 170 may constitute a transmission unit and a reception unit. The first upper node and the second upper node may be interpreted as a radio communication node executing a DC.

The time resource may be, for example, a slot, but may be a symbol shorter than the slot or a subframe longer than the slot.

The link direction may indicate either DL (which may be expressed as "D") or UL (which may be expressed as "U"). That is, it can be used for communication in that direction.

The link indication may be interpreted as a display indicating whether the time resource (For example, a slot) can be used in DL or UL. The link indication may be applied to a DC using TDD. The link indication may be referred to as TDD indication, dynamic indication, etc.

Alternatively, the upper node connecting unit 170 may receive the link indication described above from the first upper node and the second upper node, respectively.

The lower node connection unit 180 provides an interface or the like for realizing connection with a node lower than a parent node. The lower node means a radio communication node located on the end user side (which may be referred to as the downstream side or the downstream side) than the IAB node.

Specifically, the lower node connection unit 180 provides the function of a distributed unit (DU). That is, in the present embodiment, the lower node connection unit 180 is used for connection with a child node (which may be the UE 200) constituting the lower node.

The control unit 190 executes control of each function block constituting the radio communication node 150. In particular, in this embodiment, control unit 190 can perform DC control with the two radio communication nodes 100.

Specifically, the control unit 190 may operate in accordance with either a link indication received from any radio communication node 100 (the first upper node) to which the DC is connected or a link indication received from another radio communication node 100 (the second upper node) to which the DC is connected.

Specifically, the control unit 190 may perform, for example, DL reception or UL transmission in a corresponding time resource (For example, a slot) based on the link direction (DL or UL) indicated by the link indication.

Note that the control unit 190 may ignore or discard the received link indication that is not used among the two link indications. Alternatively, control unit 190 may prioritize a link indication received from the MCG (or SCG).

### (2.2) Radio communication Node 50

FIG. 3 is a functional block diagram of a radio communication node 50 constituting an IAB donor. As shown in FIG. 2, the radio communication node 50 includes a radio communication unit 51, a NW IF unit 53, a lower node connection unit 55, and a control unit 57.

The radio communication unit 51 transmits and receives a radio signal according to NR. By controlling radio (RF) signals transmitted from a plurality of antenna elements, the radio communication unit 51 can cope with Massive MIMO for generating beams with higher directivity, carrier aggregation (CA) for bundling a plurality of component carriers (CCs), and the like. Note that the radio communication unit 51 may or may not correspond to DC.

The NW IF unit 53 provides a communication interface for achieving connection with the NGC side or the like. For example, the NW IF unit 53 may include interfaces such as X2, Xn, N2, N3, etc.

The lower node connection unit 55 provides an interface for achieving connection with a node lower than the IAB donor. The lower node means a radio communication node located on the end user side (which may be referred to as the downstream side or the downstream side) of the IAB donor, and may include the radio communication node 100 (parent node) and the radio communication node 150 (IAB node).

The lower node connection unit 55 can receive a link indication (TDD indication) indicating the link direction of the time resource allocated to the radio link in the lower node (which may mean the parent node) from the lower node (the parent node). In this embodiment, the lower node connection unit 55 may constitute a reception unit for receiving a link indication from a lower node.

The radio link in the lower node (parent node) may mean the radio link between the parent node (radio communication node 100) and the IAB node (radio communication node 150), not the radio link between the IAB donor (radio communication node 50) and the parent node (radio communication node 100).

The lower node connection unit 55 may transmit the link indication received from the lower node to another lower node (radio communication node 100). In the present embodiment, the lower node connection unit 55 may constitute a transmission unit for transmitting a link indication to another lower node.

The control unit 57 executes control of each function block constituting the radio communication node 50. In particular, in the present embodiment, the control unit 57 can execute DC and perform control concerning DC between the radio communication node 100 constituting the master node (MN) and the radio communication node 100 constituting the secondary node (SN).

### (3)Operation of radio communication system

Next, the operation of radio communication system 10 will be described. Specifically, an operation related to TDD in Intra-band DC in IAB will be described.

### (3.1) Assumptions

In the Intra-band DC scenario, there is a half-duplex limitation. Therefore, the IAB-MT cannot simultaneously perform transmission (UL) to one parent node and reception (DL) from the other parent node, for example, when different link directions are individually indicated from two parent nodes of the DC connection destination on the same symbol.

Considering that the two parent nodes can independently and dynamically determine scheduling, there is a possibility that the two parent nodes indicate different link directions (link indication) and the contents of the indications may collide.

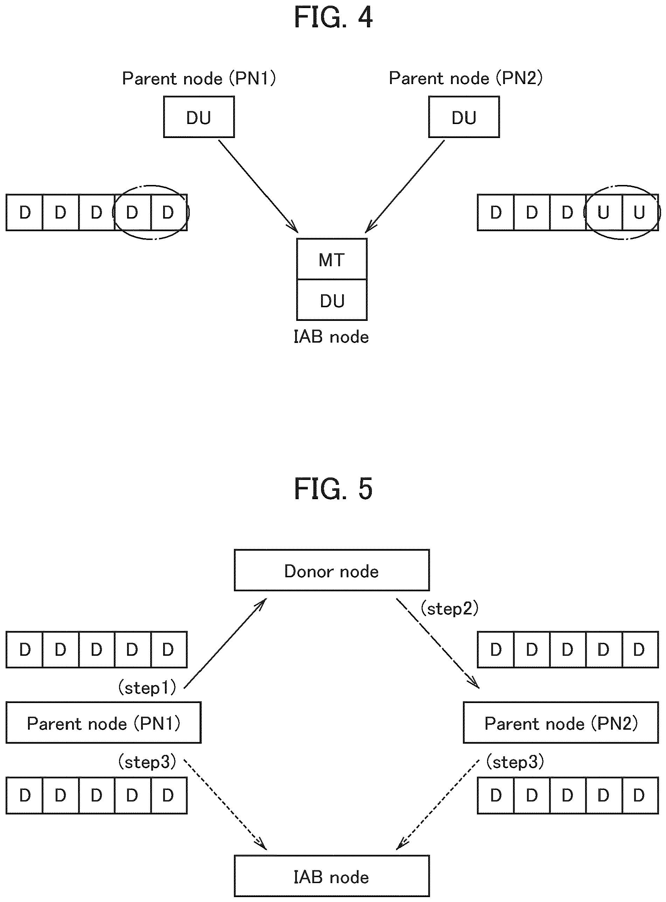

FIG. 4 shows an example of link indication in the Intra-band DC scenario of the IAB. As shown in FIG. 4, the IAB-MT cannot operate normally when different link directions are indicated from two parent nodes (PN1, PN2 are used here for convenience.), that is, when an inconsistent link direction is indicated (a portion surrounded by a dashed line where "D" and "U" do not coincide).

### (3.2) Operation overview

Hereinafter, an operation of the radio communication node which can solve the above-described problem will be described. That is, the correspondence to the case where the link indication (TDD indication) dynamically notified from the MCG and the SCG is inconsistent in the intra-band DC will be described. Specifically, the following operation examples will be described.
▪(Operation Example 1): IAB-MT does not follow the dynamic indication of the TDD pattern reported by MCG/SCG.
▪(Operation Example 2): The IAB-MT follows the dynamic indication of the TDD pattern reported by the MCG/SCG.
▪(Operation Example 2 -1): IAB-MT expects the MCG/SCG to have the same TDD pattern even if there is dynamic indication.

The sharing of TDD pattern information between parent nodes may be performed by any of the following methods.
▪(Option 1) - A parent node reports a TDD pattern to an IAB donor, which then notifies another parent node of the reported TDD pattern.
▪(Option 2): IAB-MT reports information on one TDD pattern to the other parent node, which configures the reported content
▪(Operation Example 2 -2): Even if there is dynamic indication, IAB-MT considers that the TDD pattern of MCG/SCG is different.

For the operation of the IAB-MT, any of the following may apply
▪(Option 1): TDD pattern configured in MCG has priority
▪(Option 2): The control element (MAC-CE) of the radio resource control layer (RRC)/medium access control layer (MAC)/downlink control information (DCI) informs whether the MCG/SCG TDD pattern has priority.
▪(Option 3): Prefer dynamically configured (or semi-static (Semi-static)) TDD patterns

The IAB-MT may notify the parent node of the low priority cell group of information on the high priority TDD pattern. After notification, the IAB-MT may expect at least one of the following instructions:.
▪(Option 1): Expect new notifications from low priority cell groups
▪(Option 2): Notifications are applied to low priority cell groups
▪(Option 3): Preserve notifications for the first configured low priority cell group
▪(Operation Example 3): The IAB-MT assumes that the dynamic indication of the TDD pattern is notified only from either the MCG/SCG.
▪(Option 1): provides that only one of the MCG/SCG shall be notified of Dynamic indication
▪(Option 2): MCG/SCG to notify dynamic indication is configured

### (3.3) Example of operation

Next, the contents of the above-described operation example 1 ~ 3 will be described.

### (3.3.1) Operation Example 1

In this operational example, the IAB-MT may not expect dynamic indication of slot formats from the MCG or SCG.

Specifically, the IAB-MT may expect semi-static settings of the same slot format for the MCG and SCG.

When this operation example is applied, only semi-static setting of the slot format is supported, and the dynamic indication of the slot format need not be supported. Thus, the IAB node need not assume a collision in the link direction indicated by the two parent nodes.

### (3.3.2) Example 2

In this operational example, the IAB-MT may expect dynamic indication of both MCG and SCG slot formats.

In operation example 2 -1, the IAB-MT may assume semi-static setting or dynamic indication of the same slot format for the MCG and SCG. The following cases may be included.
▪The MCG and SCG slot formats have the same dynamic indication.
▪The Dynamic indication of the slot format of one cell group is the same as semi-static setting of the other cell group.

In Operation Example 2 -2, the IAB-MT may assume a semi-static or a dynamically configured different slot format for the MCG and SCG. The following cases may be included.
▪Dynamic indication of slot format of MCG and SCG is different.
▪The slot format Dynamic indication of one cell group is different from semi-static setting of the other cell group.

### (3.3.2.1) Example 2 -1

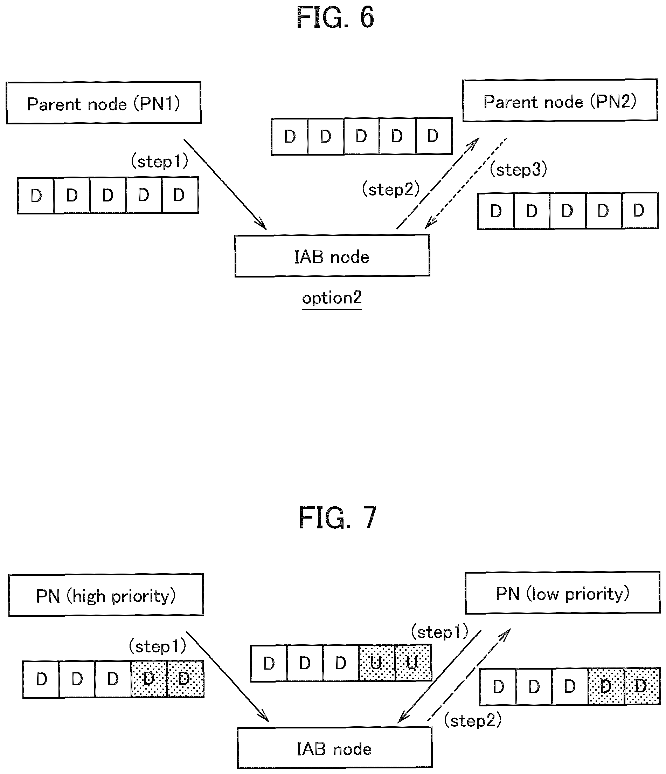

FIG. 5 shows an example of dynamic indication of the slot format according to the operation example 2 -1 (Option 1). FIG. 6 shows an example of dynamic indication of the slot format according to the operation example 2 -1 (Option 2).

In this installation, it is necessary to exchange information between the two parent nodes regarding the setting/instruction of the slot format.

As shown in FIG. 5, in Option 1, PN1 (MCG/SCG) may transmit slot format information of PN1 (MCG/SCG) from PN1 (MCG/SCG) to an IAB donor, and then transmit the slot format information from the IAB donor to PN2 (MCG/SCG).

F1-AP (Application), RRC, MAC-CE, or Layer 1 (physical layer) signaling may be used for information exchange between the IAB donor and the parent node. For semi-static slot format, the transmission of information from PN1 to the IAB donor (step 1) may be omitted.

As shown in FIG. 6, in Option 2, the slot format information of PN1 (MCG/SCG) may be transmitted from PN1 (MCG/SCG) to the IAB node (IAB-MT) and further transmitted (transferred) from the IAB node to PN2 (MCG/SCG).

MAC-CE or Layer 1 (physical layer) signaling may be used to exchange information between the parent node and the IAB node. The information transmission from PN1 to the IAB-MT (step 1) may be performed according to semi-static slot format or dynamic indication of 3GPP Release 15/16.

### (3.3.2.2) Example 2 -2

In this operation example, the IAB-MT may assume that different slot formats are set/instructed from the MCG and the SCG.

For Option 1, by default, the slot format configured or specified for the MCG (or SCG) may have higher priority.

In the case of Option 2, it may be explicitly set/indicated by the RRC/MAC-CE/DCI whether or not the slot format set/indicated for the MCG or SCG has a higher priority.

The IAB node may cancel UL transmission on a symbol-by-symbol basis for a cell group having a lower priority if it is set/instructed as DL for the cell group having a higher priority. On the other hand, the IAB node may cancel DL transmission on a symbol-by-symbol basis for a cell group having a lower priority if it is set/instructed as UL for the cell group having a higher priority.

For Option 3, by default, the slot format Dynamic indication may be preferred over semi-static slot format (or alternatively, semi-static slot format may be preferred).

For example, if the slot format of the MCG is dynamically specified and the slot format of the SCG is configured to semi-static, the priority of the MCG may be increased.

If the MCG and SCG slot formats are configured to semi-static, or if the MCG and SCG slot formats are dynamic indications, Option 1 or Option 2 may be applied.

In this case, if the IAB node is set/instructed as a DL for a cell group having a high priority in a symbol unit, the IAB node may regard it as a DL for both cell groups and cancel UL transmission for a cell group having a low priority in a symbol unit. On the other hand, if the IAB node is set/instructed as UL for a cell group having a high priority in a symbol unit, the IAB node may regard it as UL for both cell groups and cancel DL transmission for a cell group having a low priority in a symbol unit.

The UL transmission may include all or part of PUCCH (Physical Uplink Control Channel), PUSCH (Physical Uplink Shared Channel), SRS (Sounding Reference Signal), and PRACH (Physical Random Access Channel).

The DL reception may include all or part of PDSCH/PDCCH/SSB (Synchronization Signal/Physical Broadcast Channel blocks)/CSI-RS (Channel State Information Reference Signal).

In the operation example 2 -2, if the slot formats are different, the IAB node may cancel UL transmission/DL reception on the cell group, which may cause waste of resources and performance degradation of the canceled cell group. To cope with such a problem, the following operation may be performed.

FIG. 7 shows an example of dynamic indication of the slot format according to the operation example 2 -2. When different slot formats are set/instructed in the MCG and the SCG based on the operation example described above, the IAB node may notify the parent node of the cell group having a lower priority of the slot format set/instructed for the cell group having a higher priority.

Layer 1 signaling or MAC-CE may be used for the notification. For the operation of the IAB node of the notification, at least one of the following instructions may be expected, as described above.
▪(Option 1): Expect new notifications from low priority cell groups
▪(Option 2) - Notification is applied autonomously to a lower priority cell group
▪(Option 3) - Maintains the notification content for the first configured low priority cell group. Specifically, the slot format indicated for the cell group having the lower priority is left as it is, while the setting/indication of UL transmission/DL reception from the cell group having the lower priority is not expected in the symbol having the different link directions.

The UL transmission may include all or part of PUCCH/PUSCH/SRS/PRACH. The DL reception may include all or part of the PDSCH/PDCCH/SSB/CSI-RS.

This operation example may be applied to Intra-Carrier DC and Intra-band DC. Although the operation (behavior) of the IAB-MT has been described in this operation example, the same operation may be applied to the DC execution of the UE 200.
semi-static setting of the slot format may include the following:.
▪DL/UL configured by tdd-UL-DL-ConfigurationCommon via RRC
▪DL/UL configured by tdd-UL-DL-ConfigDedicated - IAB-MT via RRC (if tdd-UL-DL-ConfigDedicated applies to UE)

The slot format Dynamic indication may include the following contents. Good.
▪Explicit DL/UL Directions with DCI format 2_0
   ▪Explicit indication of DL/UL override flexible symbol in semi-static configuration
   ▪(modification) Explicit indication of DL/UL override flexible symbol or UL/DL override symbol in semi-static configuration
▪Implicit instructions by setting/instructing UL transmit or DL receive
   ▪Implicit indication of DL/UL override flexible symbol in semi-static configuration
   ▪(modification) Explicit indication of DL/UL override flexible symbol or UL/DL override symbol in semi-static configuration
   ▪The UL transmission may include all or part of PUCCH/PUSCH/SRS/PRACH. The DL reception may include all or part of the PDSCH/PDCCH/SSB/CSI-RS.

### (3.3.3) Example 3

In this operation example, it is assumed that the IAB node is notified of the dynamic indication of the TDD pattern only from either MCG/SCG.

In the case of Option 1, by default only MCG (or SCG) may be expected for Dynamic indication of slot format.

For Option 2, the RRC/MAC-CE/DCI may explicitly set/indicate whether dynamic indication of the slot format is to be expected or not.

If an IAB node expects a slot format dynamic indication for a cell group, it may operate according to one of the following:.
▪IAB-MT does not expect DCI format 2_0 to indicate the slot format of the cell group.
▪The IAB-MT does not expect to set/indicate UL transmit/DL receive for cell groups on flexible symbols.

### (4)Operational effects

According to the embodiment described above, the following effects are obtained. Specifically, the radio communication node 50 (IAB donor) can transmit a link indication (such as dynamic indication) received from a subordinate node to another subordinate node.

The radio communication node 150 (IAB node) can transmit the link indication received from the radio communication node 100 (first upper node) to the other radio communication node 100 (second upper node). Alternatively, the radio communication node 150 (IAB node) can operate in accordance with either a link indication received from the first upper node or a link indication received from the second upper node.

Therefore, the operation can be performed normally even when different (In other words, they contradict each other.) link directions are indicated by the two parent nodes to which the DC is intended, that is, when the indicated link directions are inconsistent.

### (5)Other Embodiments

Although the embodiment has been described above, it is obvious to those skilled in the art that various modifications and improvements are possible without being limited to the description of the embodiment.

For example, in the above-described embodiment, the names of the parent node, the IAB node, and the child node are used, but the names may be different as long as a configuration of a radio communication node in which a radio backhaul between radio communication nodes such as gNB and radio access with a terminal are integrated is adopted. For example, it may be simply referred to as a first node, a second node, or the like, or it may be referred to as an upper node, a lower node, a relay node, an intermediate node, or the like.

Further, the radio communication node may be referred to simply as a communication device or communication node, or may be read as a radio base station.

The block configuration diagrams (FIGS. 2 and 3) used in the description of the above-described embodiment show blocks in units of functions. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that functions the transmission is called a transmission unit (transmitting unit) or a transmitter. As described above, there is no particular limitation on the method of implementation.

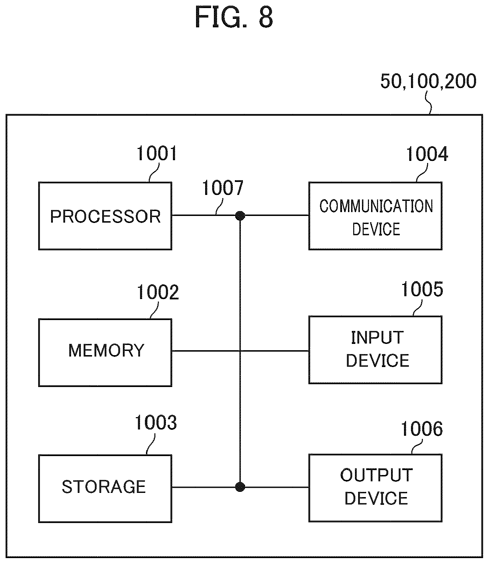

Further, the above-described radio communication node 50, radio communication node 100 and radio communication node 150 (the apparatus) may function as a computer that performs processing of the radio communication method of the present disclosure. FIG. 8 is a diagram showing an example of a hardware configuration of the apparatus. As shown in FIG. 8, the device may be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

Each functional block of the device (see FIGS. 2 and 3) is realized by any hardware element of the computer device or a combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

The processor 1001 operates, for example, an operating system to control the entire computer. Processor 1001 may comprise a central processing unit (CPU) including interfaces to peripheral devices, controllers, arithmetic units, registers, and the like.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. Memory 1002 may be referred to as a register, cache, main memory, or the like. The memory 1002 may store programs (program codes), software modules, and the like that are capable of executing the method according to one embodiment of the present disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Devices such as the processor 1001 and the memory 1002 are connected by a bus 1007 for communicating information. The bus 1007 may be configured using a single bus or may be configured using different buses for each device.

In addition, the device may comprise hardware such as a microprocessor, a digital signal processor (DSP), an application specific integrated circuit (ASIC), a programmable logic device (PLD), a field programmable gate array (FPGA), and the hardware may implement some or all of each functional block. For example, the processor 1001 may be implemented by using at least one of these hardware.

Further, the notification of the information is not limited to the mode/embodiment described in the present disclosure, and other methods may be used. For example, notification of information may be performed by physical layer signaling (e.g., Downlink Control Information (DCI), Uplink Control Information (UCI), higher layer signaling (e.g., RRC signaling, Medium Access Control (MAC) signaling, broadcast information (Master Information Block (MIB), System Information Block (SIB)), other signals, or a combination thereof. The RRC signaling may also be referred to as an RRC message, for example, an RRC Connection Setup message, an RRC Connection Reconfiguration message, and the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, and the like of each aspect/embodiment described in the present disclosure may be changed in order as long as there is no contradiction. For example, the methods described in this disclosure use an exemplary sequence to present the elements of the various steps and are not limited to the particular sequence presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each of the aspects/embodiments described in the present disclosure may be used alone, in combination, or switched over in accordance with implementation. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channel and the symbol may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile body may be a vehicle (For example, cars, planes, etc.), an unmanned mobile body (Drones, self-driving cars, etc.), or a robot (manned or unmanned). At least one of a base station and a mobile station can be a device that does not necessarily move during the communication operation. For example, at least one of a base station and a mobile station may be an Internet of Things (IoT) device such as a sensor.

The base station in the present disclosure may be read as a mobile station (user terminal). For example, each aspect/embodiment of the present disclosure may be applied to a configuration in which communication between a base station and a mobile station is replaced with communication between a plurality of mobile stations (For example, it may be called Device-to-Device (D2D), Vehicle-to-Everything (V2X), etc.). In this case, the mobile station may have the function of the base station. In addition, words such as "up" and "down" may be replaced with words corresponding to communication between terminals (For example, "side".). For example, terms an uplink channel, a downlink channel, or the like may be read as a side channel.

Similarly, the mobile station in the present disclosure may be read as a base station. In this case, the base station may have the function of the mobile station. A radio frame may be composed of one or more frames in the time domain. Each frame or frames in the time domain may be referred to as a subframe. A subframe may be further configured by one or more slots in the time domain. The subframe may be a fixed time length (For example, 1 ms) independent of the numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. PDSCH (or PUSCH) transmitted in time units greater than the minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the sub-frame and TTI may be a sub-frame (1 ms) in the existing LTE, a period shorter than 1 ms (For example, 1 -13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. The number of slots (minislot number) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB based on the common reference point of the carrier. PRB may be defined in BWP and numbered within that BWP.

BWP may include UL BWP (UL BWP) and DL BWP (DL BWP). One or a plurality of BWPs may be set in one carrier for the UE.

At least one of the configured BWPs may be active, and the UE may not expect to send and receive certain signals/channels outside the active BWP. Note that "cell", "carrier", and the like in this disclosure may be read as "BWP".

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each apparatus may be replaced with "unit", "circuit", "device", and the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining" and "determining" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. That is, "judgment" or "decision" may include regarding some action as "judgment" or "decision". Moreover, "judgment (decision)" may be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 radio communication system
20 NG-RAN
50 radio communication node
51 radio communication unit
53 NW IF unit
55 lower node connection unit
57 control unit
100 radio communication node
110 radio communication unit
150 radio communication node
170 upper node connection unit
180 lower node connection unit
190 control unit
200 UE
1001 processor
1002 memory
1003 storage
1004 communication device
1005 input device
1006 output device
1007 bus

## Claims

1. A radio communication node comprising:
a reception unit that receives a link indication indicating a link direction of a time resource allocated to a radio link in a lower node from the lower node; and
a transmission unit that transmits the link indication received from the lower node to another lower node.

2. A radio communication node comprising:
a reception unit that receives a link indication indicating a link direction of a time resource allocated to a radio link in a lower node from a first upper node; and
a transmission unit that transmits the link indication received from the first upper node to the second upper node.

3. A radio communication node comprising:
a reception unit that receives a link indication indicating a link direction of a time resource allocated to a radio link in a lower node from a first upper node and a second upper node, respectively; and
a control unit that operates according to either the link indication received from the first upper node or the link indication received from the second upper node.

4. A radio communication method comprising the steps of:
receiving, by a radio communication node, a link indication indicating a link direction of a time resource allocated to a radio link in a lower node from a first upper node; and
transmitting, by the radio communication node, the link indication received from the lower node to another lower node.

5. A radio communication method comprising the steps of
receiving, by a radio communication node, a link indication indicating a link direction of a time resource allocated to a radio link in a lower node from a first upper node; and
transmitting, by the radio communication node, the link indication received from the lower node to a second upper node.

6. A radio communication method comprising the steps of:
receiving, by a radio communication node, a link indication indicating a link direction of a time resource allocated to a radio link in a lower node from a first upper node and a second upper node, respectively; and
operating, by the radio communication node, according to either the link indication received from the first upper node or the link indication received from the second upper node.
